# EUROPÄISCHE PATENTSCHRIFT

(11) **EP 2 138 677 B1**
(45) Veröffentlichungstag und Bekanntmachung des Hinweises auf die Patenterteilung: **28.09.2016**
(21) Anmeldenummer: 08007315.8
(22) Anmeldetag: 14.04.2008
(51) Int. Cl.: F01K 13/02, F01K 23/10, F01K 7/18, F01K 7/16

(54) **Gas- und Dampfturbinenanlage**
Gas and steam turbine array
Installation de turbines à gaz et à vapeur

(43) Veröffentlichungstag der Anmeldung: 30.12.2009
(73) Patentinhaber: Siemens Aktiengesellschaft, 80333 München (DE)
(72) Erfinder: Beul, Ulrich, 45149 Essen (DE); Heue, Matthias, 44879 Bochum (DE); Hofbauer, Thomas, Dr., 45478 Muelheim / Ruhr (DE); Hoffacker, Ralf, 47800 Krefeld (DE); Kaufmann, Carsten, 45478 Mülheim a.d. Ruhr (DE); Knudsen, Dirk, 45964 Gladbeck (DE); Kunze, Markus, 46569 Hünxe (DE)

(56) Entgegenhaltungen:
- EP-A- 0 911 504
- EP-A- 0 949 406
- EP-A- 1 624 041
- WO-A-97/40268
- WO-A-99/40306
- JP-A- 11 002 105

## Beschreibung

Die Erfindung betrifft eine Gas- und Dampfturbinenanlage mit einer den Brennern der Gasturbine vorgeschalteten Brennstoffvorwärmeinrichtung und mit einem der Gasturbine rauchgasseitig nachgeschalteten Abhitzedampferzeuger, dessen Heizflächen in den Wasser-Dampf-Kreislauf der Dampfturbine geschaltet sind, wobei die Dampfturbine eine Anzahl von Druckstufen umfasst. Sie betrifft weiter ein Verfahren zum Anfahren einer derartigen Gas- und Dampfturbinenanlage.

Eine derartige Gas-und Dampturbinenanlage ist z.B. in Dokument WO99/40306 A offenbart.

Gas- und Dampfturbinenanlagen (GuD-Anlagen) dienen überwiegend der Stromerzeugung. Dabei umfasst eine moderne GuD-Anlage üblicherweise ein bis vier Gasturbinen und mindestens eine Dampfturbine, wobei entweder jede Turbine jeweils einen Generator antreibt (Mehrwellenanlage) oder eine Gasturbine mit der Dampfturbine auf einer gemeinsamen Welle einen einzigen Generator antreibt (Einwellenanlage). Die heißen Abgase der Gasturbine werden dabei in einem Abhitzedampferzeuger zur Erzeugung von Wasserdampf verwendet. Der Dampf wird anschließend der Dampfturbine zugeführt. Üblicherweise entfallen ca. zwei Drittel der elektrischen Leistung auf die Gasturbine und ein Drittel auf den Dampfprozess.

Die Leistungen von üblichen GuD-Anlagen liegen im Bereich zwischen beispielsweise 80 MW und 830 MW pro Einheit Gasturbine/Dampfturbine, wobei eine Kraftwerksanlage aus mehreren Einheiten bestehen kann. Im Vergleich dazu hat ein Block eines Kernkraftwerks üblicherweise eine Leistung zwischen 500 MW und 1.500 MW.

Eine GuD-Anlage zeichnet sich insbesondere durch einen außerordentlich hohen Wirkungsgrad aus. Dieser resultiert daraus, dass die Wärme des aus der Gasturbine austretenden Abgases nicht verworfen, sondern zur weiteren Energiegewinnung benutzt wird. In modernen GuD-Anlagen sind darüber hinaus weitere Möglichkeiten der Erhöhung des Wirkungsgrades realisiert:
Zur Erhöhung des Wirkungsgrades der Gasturbine der GuD-Anlage wird beispielsweise die Temperatur des Brennstoffs vor der Zuführung in die Gasturbine mittels der so genannten Brennstoffvorwärmung erhöht. Dazu wird das Abgas aus dem Abhitzedampferzeuger der GuD-Anlage genutzt, das eine für diesen Zweck ausreichende Temperatur hat. Die Brennstoffvorwärmung erhöht den Energiegehalt des Brennstoffes und ermöglicht dadurch eine effizientere Ausnutzung des Primärenergieträgers.
Zur Erhöhung des Wirkungsgrades der Dampfturbine der GuD-Anlage umfasst diese üblicherweise mehrere Druckstufen, die für unterschiedliche Dampfdrücke ausgelegt sind. Der im Abhitzedampferzeuger überhitzte Dampf wird dabei nach seiner Entspannung in der Hochdruckstufe der Dampfturbine erneut in den Abhitzedampferzeuger zurückgeführt und nochmals überhitzt. Dieser Dampf wird dann den nachgeschalteten Druckstufen zugeführt. Diese so genannte Zwischenüberhitzung erhöht den Wirkungsgrad der Dampfturbine über die höhere mittlere Temperatur der Wärmezufuhr. Im Übrigen wird damit Erosion an den letzten Schaufeln im Niederdruckteil der Dampfturbine infolge zu hoher Dampfnässe vermieden.

Theoretisch ist eine Vielzahl von Druckstufen in einer Dampfturbine denkbar, allerdings ist der zusätzliche Investitionsaufwand dann im Verhältnis zur wärmetechnischen Verbesserung zu hoch. Derzeit stellt eine GuD-Anlage mit drei Druckstufen in der Dampfturbine und einer einzigen Zwischenüberhitzung das wirtschaftliche Optimum dar.

Durch ihre Flexibilität, insbesondere die Möglichkeit des schnellen Anfahrens, werden moderne GuD-Anlagen oft zur Bereitstellung kurzzeitig auftretender hoher Leistungsnachfrage im Stromnetz, so genannter Spitzenlast, verwendet. Dies führt zu vergleichsweise häufigen Anfahrvorgängen in GuD-Anlagen. Problematisch beim Anfahren von Dampfturbinen mit Zwischenüberhitzung ist, dass bei niedrigen Dampfturbinenleistungen die dabei entstehenden Temperaturen am Austritt der Hochdruckstufe der Dampfturbine vergleichsweise hoch sind. Dies resultiert aus dem geringen Energieverlust des Dampfes in der Hochdruckstufe der während des Anfahrvorganges mit Drehzahlen unterhalb der Stromnetzfrequenz von 50 Hz oder 60 Hz laufenden Dampfturbine.

Eine bekannte Lösung für dieses Problem ist beispielsweise eine Dampfleitung, die den Hochdruckabdampf aus dem System entfernt und an den der Dampfturbine zur Speisewasserrückgewinnung angeschlossenen Kondensator weiterleitet. Dadurch kann der Druck hinter der Hochdruckstufe der Dampfturbine abgesenkt und somit die Temperatur verringert werden. Bei diesem Vorgehen wird jedoch die im Dampf enthaltene Energie ohne Nutzen verworfen, was dem Auslegungsziel heutiger GuD-Anlagen, nämlich einen besonders hohen Wirkungsgrad zu erreichen, widerspricht.

Der Erfindung liegt daher die Aufgabe zugrunde, eine Gas- und Dampfturbinenanlage der oben genannten Art anzugeben, die bei einer besonders hohen betrieblichen Flexibilität einen besonders hohen Wirkungsgrad im Anfahrprozess erreicht. Weiterhin soll ein besonders effizientes Verfahren zum Anfahren einer derartigen Gas- und Dampfturbinenanlage angegeben werden.

Bezüglich der Gas- und Dampfturbinenanlage wird diese Aufgabe erfindungsgemäß gelöst, indem eine Dampfleitung einen zwischen zwei Druckstufen liegenden Dampfaustritt mit einer der Brennstoffvorwärmeinrichtung zugeordneten Dampftrommel verbindet.

Die Erfindung geht dabei von der Überlegung aus, dass ein besonders hoher Wirkungsgrad beim Anfahrprozess der GuD-Anlage erreicht werden könnte, wenn der beim Anfahrprozess der GuD-Anlage anfallende Hochdruckdampf am Austritt der Hochdruckstufe der Dampfturbine nicht einfach verworfen würde, sondern in irgendeiner Form zur Energiegewinnung genutzt werden könnte. Dabei kommt grundsätzlich eine Nutzung entweder im Gas- oder im Dampfturbinenprozess in Frage. Da auf die Gasturbine ein höherer Anteil der Leistung der gesamten GuD-Anlage entfällt als auf die Dampfturbine, kann eine besonders effektive Erhöhung des Wirkungsgrades insbesondere im Bereich der Gasturbine erreicht werden.

Je höher der Ausgangswirkungsgrad der Gasturbine ist, desto größer sollte der erzielbare Wirkungsgradzuwachs durch nachgelagerte Maßnahmen sein. Daher kann durch eine Erhöhung der Brennstofftemperatur vor der Verbrennung, die die GuD-prozessmäßig erste Maßnahme zur Wirkungsgradsteigerung darstellt, durch Folgeeffekte eine besonders hohe Steigerung der Energieeffizienz erreicht werden.

Der beim Anfahrprozess anfallende Hochdruckdampf ist für die Weiterleitung in nachfolgende Dampfturbinenbauteile zu heiß und mit zu hohem Druck beaufschlagt und muss daher abgeführt werden. Die Dampfparameter sind aber derart, dass dieser Dampf ohne zusätzliche Zwischenüberhitzung zur Brennstoffvorwärmung genutzt werden könnte. Dies ist erreichbar, indem eine Dampfleitung einen zwischen zwei Druckstufen liegenden Dampfaustritt mit einer der Brennstoffvorwärmeinrichtung zugeordneten Dampftrommel verbindet.

In vorteilhafter Ausgestaltung verbindet die Dampfleitung den hinter der ersten, mit dem höchsten Druck beaufschlagten Druckstufe liegenden Dampfaustritt mit einem Dampfeintritt einer der Brennstoffvorwärmeinrichtung zugeordneten Dampftrommel. Bei den heute üblichen Dampfturbinen, die drei verschiedene Druckstufen umfassen, ist insbesondere der am Austritt der Hochdruckstufe anfallende Dampf während des Anfahrprozesses zu heiß und steht unter zu hohem Druck, um in die Mitteldruckstufe eingeleitet werden zu können. Daher ist insbesondere hier ein Auslass vorgesehen, über den der Dampf abgeführt werden kann und somit Druck und Temperatur vermindert werden können, um die betriebliche Sicherheit der Mitteldruckstufe zu gewährleisten.

Vorteilhafterweise umfasst die Dampfleitung ein Regelventil. Dadurch kann die Ableitung des mit hohem Druck beaufschlagten Dampfes am Austritt der Hochdruckstufe der Dampfturbine bedarfsgerecht geregelt werden. Dies ermöglicht einen noch flexibleren und effizienteren Anfahrvorgang der gesamten GuD-Anlage.

Bezüglich des Verfahrens wird die Aufgabe erfindungsgemäß gelöst, indem während des Anfahrvorgangs zwischen den Druckstufen entnommener Anzapfdampf zur Brennstoffvorwärmung genutzt wird.

Im laufenden Betrieb, d. h. wenn die Welle mit der Stromnetzfrequenz von 50 Hz oder 60 Hz betrieben wird, sind die Parameter der Dampfturbine üblicherweise so gewählt, dass der aus der Hochdruckstufe der Dampfturbine austretende Dampf vollständig der Überhitzung zugeführt und in die nachfolgenden Druckstufen eingeleitet werden kann. Lediglich in der Anfahrphase unterhalb dieser Frequenzen sind Temperatur und Druck des Dampfes zu hoch für eine derartige Weiterleitung, und ein Teil des Dampfes muss abgeleitet werden. Daher kann insbesondere in dieser Phase der abgeleitete Dampf zur Brennstoffvorwärmung genutzt werden.

Die mit der Erfindung erzielten Vorteile bestehen insbesondere darin, dass durch die Nutzung des zwischen den Druckstufen der Dampfturbine entnommenen Dampfes während des Anfahrprozesses zur Brennstoffvorwärmung der Gasturbine ein besonders hoher Wirkungsgrad der GuD-Anlage insbesondere während des Anfahrprozesses erreicht wird. Dabei ist diese Maßnahme besonders einfach baulich zu verwirklichen, da die meisten GuD-Neuanlagen heute bereits mit einer separaten Brennstoffvorwärmung ausgeliefert werden. Durch die Nutzung des ohnehin anfallenden Dampfes aus der Abführung nach der Hochdruckstufe der Dampfturbine kann Energie in der Brennstoffvorwärmungseinrichtung ausgenutzt werden, wodurch die Kraftwerksperformance gerade in der Anfahrphase steigt.

Ein Ausführungsbeispiel der Erfindung wird anhand zweier Zeichnung näher erläutert. Darin zeigen:
- FIG 1: eine schematische Darstellung einer erfindungsgemäßen GuD-Anlage und
- FIG 2: eine schematische Darstellung einer alternativen GuD-Anlage mit einer Dampfleitung, die einen zwischen hinter der Hochdruckstufe liegenden Dampfaustritt mit einem Dampfeintritt der Brennstoffvorwärmeinrichtung verbindet.

Gleiche Teile sind in beiden Figuren denselben Bezugszeichen versehen.

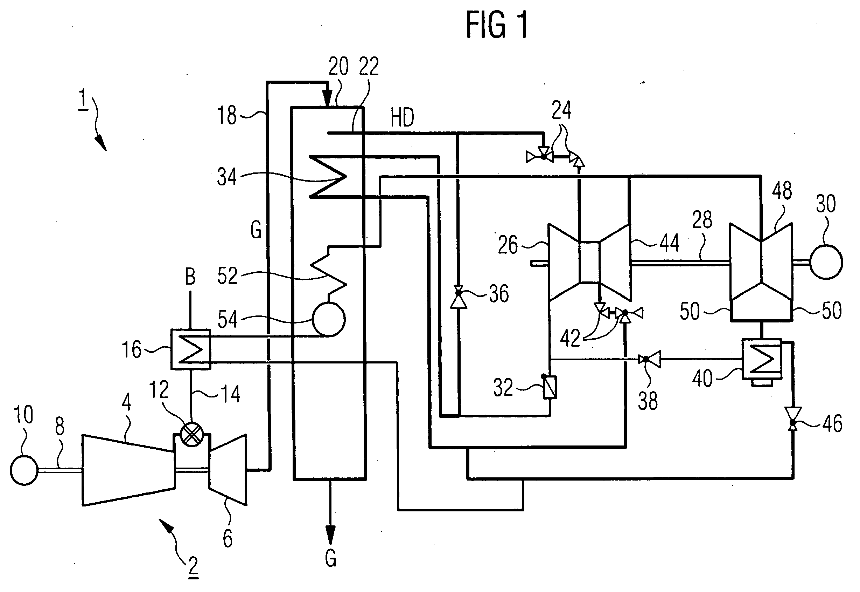

FIG 1 zeigt eine schematische Darstellung einer erfindungsgemäßen GuD-Anlage 1. Eine Gasturbine 2 umfassend einen Verdichter 4 und eine Turbine 6 ist dabei über eine Welle 8 mit einem Generator 10 verbunden. Angetrieben wird die Gasturbine 2 durch Verbrennung von durch eine Brennstofffördereinrichtung 12 aus einer Brennstoffleitung 14 zugeführten Brennstoff B. Zur Erhöhung des Wirkungsgrads der Gasturbine 2 wird der Brennstoff B mittels einer Brennstoffvorwärmeinrichtung 16 vorgewärmt.

Die durch die Verbrennung des Brennstoffs B freigewordene Energie wird in der Gasturbine 2 in mechanische Energie umgewandelt und über die Welle 8 an den Generator 10 übertragen, indem sie in elektrische Energie umgewandelt wird. Das in der Turbine 6 entspannte Rauchgas G wird anschließend über eine Abgasleitung 18 einem Abhitzedampferzeuger 20 zugeführt, wo es aufgrund seiner vergleichsweise hohen Temperatur von beispielsweise etwa 650 °C zur Dampferzeugung genutzt wird. Anschließend wird das Rauchgas G einem nicht näher gezeigten Abgaskamin zugeführt.

Im Abhitzedampferzeuger 20 wird in den Heizflächen 22 überhitzter Hochdruckdampf HD erzeugt. Dabei sind verschiedene Konfigurationen der Heizflächen 22 denkbar. Üblicherweise wird aus einer nicht näher gezeigten Wasserpumpe Wasser den Verdampferheizflächen zugeführt, in denen das Wasser teilweise oder ganz verdampft wird. Das nicht verdampfte Wasser kann gegebenenfalls anschließend in einer Wasserabscheideeinrichtung vom Dampf getrennt werden und der Dampf wird Überhitzerheizflächen zugeführt, in denen seine Wärmeenergie weiter erhöht wird.

An die Heizflächen 22 schließen sich Regelventile 24 an, durch die der Hochdruckdampf HD schließlich in die Hochdruckturbinenstufe 26 geleitet wird. Hier wird der Dampf entspannt und somit die thermische Energie in mechanische Energie umgewandelt, die über eine Welle 28 an einen Generator 30 übertragen wird, wo sie weiter in elektrische Energie umgewandelt wird. Der entspannte Dampf wird aus der Hochdruckturbinenstufe 26 ausgeführt und über einen Regler 32 weiteren Überhitzerheizflächen 34 im Abhitzedampferzeuger 20 zugeführt. Betriebsabhängig kann dabei der Weg des Hochdruckdampfes beeinflusst werden: Bedarfsweise kann der Hochdruckdampf aus den Heizflächen 22 an der Hochdruckturbinenstufe 26 über ein Ventil 36 vorbeigeführt werden.

Ist der aus der Hochdruckturbinenstufe 26 austretende Dampf zu heiß oder hat einen zu hohen Druck für die weitere Verwendung, was insbesondere während des Anfahrprozesses der Dampfturbine auftreten kann, kann ein Teil des Dampfes über ein Ventil 38 direkt an den Kondensator 40 abgeführt werden. Dort wird der Dampf abgekühlt und wieder in flüssiges Wasser überführt, welches erneut dem Verdampfungsprozess in den Heizflächen 22 des Abhitzedampferzeugers 20 zugeführt werden kann. Dabei wird allerdings der gesamte Energieinhalt des Dampfes verworfen.

In den Überhitzerheizflächen 34 wird der aus der Hochdruckturbinenstufe 26 ausgetretene Dampf nochmals überhitzt und über weitere Regelventile 42 der Mitteldruckturbinenstufe 44 zugeführt. Dabei liegt die Mitteldruckturbinenstufe 44 auf derselben Welle 28 wie die Hochdruckturbinenstufe 26. Bedarfsweise kann der Dampf auch direkt über ein Ventil 46 in den Kondensator 40 abgeführt werden.

Nach der Entspannung in der Mitteldruckturbinenstufe 44 wird ein Teil des-Dampfes der Niederdruckturbinenstufe 48 zugeführt, die wiederum auf derselben Welle 28 wie die Mitteldruckturbinenstufe 44 und die Hochdruckturbinenstufe 26 liegt. Nach seiner Entspannung in der Niederdruckturbinenstufe 48 wird der Dampf über Ableitungen 50 schließlich dem Kondensator 40 zugeführt, wo er abgekühlt und wieder in flüssiges Wasser überführt wird, welches erneut dem Verdampfungsprozess in den Heizflächen 22 des Abhitzedampferzeugers 20 zugeführt werden kann.

Kondensat wird aus der Mitteldruckturbinenstufe 44 in den Abhitzedampferzeuger 20 geführt, wo es verdampft wird und in Heizflächen 52 erhitzt wird. Dieser Dampf wird anschließend über eine Dampftrommel 54 in die Brennstoffvorwärmeinrichtung 16 geleitet und dort zur Vorwärmung des Brennstoffes B genutzt, wodurch der Wirkungsgrad der Gasturbine 2 durch die Erhöhung der Temperatur des Brennstoffes B und damit des Gasgemisches in der Brennkammer der Gasturbine 2 insgesamt erhöht wird.

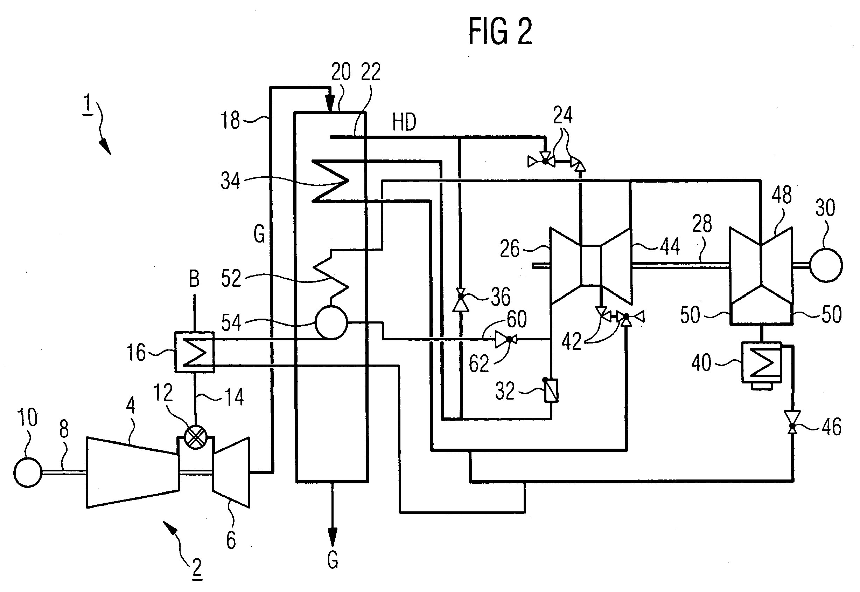

FIG 2 zeigt eine alternative Gas- und Dampfturbinenanlage 1, bei der jedoch die Dampfleitung über das Ventil 38 entfällt, die bedarfsweise, z. B. im Anfahrbetrieb der Dampfturbine den aus den Hochdruckturbinenstufe 26 austretenden Dampf dem Kondensator 40 zuführt, um die Dampfparameter auf die für die weitere Verwendung gewünschten Werte zu bringen.

Stattdessen ist eine Dampfleitung 60 vorgesehen, die über ein Regelventil 62 den Dampf der der Brennstoffvorwärmeinrichtung 16 der Gasturbine 2 zugeordneten Dampftrommel 54 zuführt. Dadurch können ebenfalls bedarfsweise die Dampfparameter am Austritt der Hochdruckturbinenstufe 26 angepasst werden, jedoch wird die Energie des Dampfes nicht einfach im Kondensator 40 verworfen, sondern über den Austausch thermischer Energie in der Dampftrommel 54 zur Brennstoffvorwärmung für die Gasturbine 2 genutzt. Dadurch ist insgesamt ein noch höherer Wirkungsgrad der Gas- und Dampfturbinenanlage 1, insbesondere im Anfahrbetrieb erreichbar.

## Patentansprüche

1. Gas- und Dampfturbinenanlage (1) mit einer den Brennern der Gasturbine (2) vorgeschalteten Brennstoffvorwärmeinrichtung (16) und mit einem der Gasturbine (2) rauchgasseitig nachgeschalteten Abhitzedampferzeuger (20), dessen Heizflächen (22) in den Wasser-Dampf-Kreislauf der Dampfturbine geschaltet sind, wobei die Dampfturbine eine Anzahl von Druckstufen umfasst, **dadurch gekennzeichnet, dass** eine Dampfleitung (60) einen zwischen zwei Druckstufen liegenden Dampfaustritt mit einer der Brennstoffvorwärmeinrichtung (16) zugeordneten Dampftrommel (54) verbindet.

2. Gas- und Dampfturbinenanlage (1) nach Anspruch 1, bei der die Dampfleitung (60) den hinter der ersten, mit dem höchsten Druck beaufschlagten Druckstufe liegenden Dampfaustritt mit einer der Brennstoffvorwärmeinrichtung (16) zugeordneten Dampftrommel (54) verbindet.

3. Gas- und Dampfturbinenanlage (1) nach Anspruch 1 oder 2, bei der die Dampfleitung (60) ein Regelventil (62) umfasst.

4. Verfahren zum Anfahren einer Gas- und Dampfturbinenanlage (1) mit einer der Brennkammer der Gasturbine (2) vorgeschalteten Brennstoffvorwärmeinrichtung (16) und mit einem der Gasturbine (2) rauchgasseitig nachgeschalteten Abhitzedampferzeuger (20), dessen Heizflächen (22) in den Wasser-Dampf-Kreislauf der Dampfturbine geschaltet sind, wobei die Dampfturbine eine Anzahl von Druckstufen umfasst, und bei dem während des Anfahrvorgangs zwischen den Druckstufen entnommener Anzapfdampf zur Brennstoffvorwärmung genutzt wird, **dadurch gekennzeichnet, dass** der Anzapfdampf einer der Brennstoffwärmung zugeordneten Dampftrommel zugeführt wird.

5. Verfahren nach Anspruch 4, bei dem während des Anfahrvorgangs hinter der ersten, mit dem höchsten Druck beaufschlagten Druckstufe entnommener Anzapfdampf zur Brennstoffvorwärmung genutzt wird.

6. Verfahren nach Anspruch 4 oder 5, bei dem die Menge des entnommenen Anzapfdampfes über ein Regelventil (62) geregelt wird.

## Claims

1. Combined cycle power plant (1) having a fuel preheating device (16) connected upstream of the burners of the gas turbine (2), and having a waste heat steam generator (20) which is connected downstream of the gas turbine (2) on the flue gas side and whose heating surfaces (22) are connected into the water-steam circuit of the steam turbine, wherein the steam turbine comprises a number of pressure stages, **characterized in that** a steam line (60) connects a steam outlet located between two pressure stages to a steam drum (54) assigned to the fuel preheating device (16).

2. Combined cycle power plant (1) according to Claim 1, in which the steam line (60) connects the steam outlet located downstream of the first, highest-pressure stage to a steam drum (54) assigned to the fuel preheating device (16).

3. Combined cycle power plant (1) according to Claim 1 or 2, in which the steam line (60) comprises a control valve (62).

4. Method for starting up a combined cycle power plant (1) having a fuel preheating device (16) connected upstream of the combustion chambers of the gas turbine (2), and having a waste heat steam generator (20) which is connected downstream of the gas turbine (2) on the flue gas side and whose heating surfaces (22) are connected into the water-steam circuit of the steam turbine, wherein the steam turbine comprises a number of pressure stages, and in which, during the starting procedure, bleed steam withdrawn from between the pressure stages is used for fuel preheating, **characterized in that** the bleed steam is fed to a steam drum assigned to the fuel preheating.

5. Method according to Claim 4, in which, during the starting procedure, bleed steam withdrawn from downstream of the first, highest-pressure stage is used for fuel preheating.

6. Method according to Claim 4 or 5, in which the quantity of the withdrawn bleed steam is controlled by means of a control valve (62).

## Revendications

1. Installation (1) de turbine à gaz et de turbine à vapeur, comprenant un dispositif (16) de préchauffage du combustible monté en amont des brûleurs de la turbine (2) à gaz et un générateur de vapeur (20) à récupération de la chaleur perdue, qui est monté en aval du côté des gaz de fumée de la turbine (2) à gaz et dont les surfaces (22) de chauffe sont montées dans le circuit eau-vapeur de la turbine à vapeur, la turbine à vapeur comprenant un certain nombre d'étages de pression, **caractérisée en ce qu'**un conduit (60) pour de la vapeur met une sortie de vapeur entre deux étages de pression en communication avec un ballon (54) à vapeur associé au dispositif (16) de préchauffage du combustible.

2. Installation (1) de turbine à gaz et de turbine à vapeur suivant la revendication 1, dans laquelle le conduit (60) pour de la vapeur met la sortie de la vapeur se trouvant derrière le premier étage de pression soumis à la pression la plus haute en communication avec un ballon (54) à vapeur associé au dispositif (16) de préchauffage du combustible.

3. Installation (1) de turbine à gaz et de turbine à vapeur suivant la revendication 1 ou 2, dans laquelle le conduit (60) pour de la vapeur comprend une vanne (62) de réglage.

4. Procédé de mise en marche d'une installation (1) de turbine à gaz et de turbine à vapeur, comprenant un dispositif (16) de préchauffage du combustible monté en amont des brûleurs de la turbine (2) à gaz et un générateur de vapeur (20) à récupération de la chaleur perdue, qui est monté en aval du point de vue des gaz de fumée de la turbine (2) à gaz et dont les surfaces (22) de chauffe sont montées dans le circuit eau-vapeur de la turbine à vapeur, la turbine à vapeur comprenant un certain nombre d'étages de pression, et dans lequel, pendant l'opération de mise en marche, on utilise, pour le préchauffage du combustible, de la vapeur de soutirage prélevée entre les étages de pression, **caractérisé en ce qu'**on envoie la vapeur de soutirage à un ballon à vapeur associé au chauffage du combustible.

5. Procédé suivant la revendication 4, dans lequel, pendant l'opération de mise en marche, on utilise, pour préchauffer le combustible, de la vapeur de soutirage prélevée du premier étage de pression soumis à la pression la plus haute.

6. Procédé suivant la revendication 4 ou 5, dans lequel on règle la quantité de vapeur de soutirage prélevée par une vanne (62) de réglage.
